# FASCICULE DE BREVET EUROPEEN

(11) **EP 3 787 816 B1**
(45) Date de publication et mention de la délivrance du brevet: **23.11.2022**
(21) Numéro de dépôt: 19812827.4
(22) Date de dépôt: 05.12.2019
(51) Int. Cl.: B22F 1/07, B22F 3/10, B22F 3/105, B22F 3/15, B22F 9/04, B22F 10/12, B22F 10/14, B22F 10/16, B22F 10/18, B22F 10/28, B22F 10/34, B33Y 70/00, C22C 1/04, C22C 1/05, C22C 5/00, C22C 5/02, C22C 5/04, C22C 5/06, C22C 32/00

(54) **PROCÉDÉ DE FABRICATION D'ALLIAGES DE MÉTAUX PRÉCIEUX ET ALLIAGES DE MÉTAUX PRÉCIEUX AINSI OBTENUS**
VERFAHREN ZUR HERSTELLUNG VON EDELMETALLLEGIERUNGEN UND DAMIT ERHALTENE EDELMETALLLEGIERUNGEN
METHOD FOR MANUFACTURING PRECIOUS METAL ALLOYS AND PRECIOUS METAL ALLOYS THUS OBTAINED

(30) Priorité: 07.12.2018 EP 18210947
(43) Date de publication de la demande: 10.03.2021
(73) Titulaire: The Swatch Group Research and Development Ltd, 2074 Marin (CH)
(72) Inventeur: MIKO, Csilla, 1417 Essertines-sur-Yverdon (CH); GROSJEAN, Rémi, 2503 Bienne (CH); BAZIN, Jean-Luc, 2512 Tüscherz-Alfermée (CH); PORTEHAULT, David, 94800 Villejuif (FR); LE GODEC, Yann, 75013 Paris (FR); DELACROIX, Simon, 35230 Orgères (FR); IGOA SALDANA, Fernando, 92120 Montrouge (FR)
(74) Mandataire: ICB SA
(86) Numéro de dépôt international: PCT/EP2019/083802
(87) Numéro de publication internationale: WO 2020/115201

(56) Documents cités:
- US-A- 3 211 550
- US-A1- 2010 119 400
- US-A1- 2017 164 700
- RAINER SÜSS ET AL: "18 Carat Yellow Gold Alloys with Increased Hardness", GOLD BULLETIN, SPRINGER, LONDON, UK, vol. 37, no. 3-4, 1 septembre 2004 (2004-09-01), pages 196-207, XP002713239, ISSN: 0017-1557, DOI: 10.1007/BF03215213
- H Okamoto ET AL: "Phase Equilibria, Crystallographic and Thermodynamic Data of Binary Alloys 1 Landolt-Börnstein New Series IV/12A Supplement to IV/5A - X binary systems", , 1 janvier 1992 (1992-01-01), XP055669250, Extrait de l'Internet: URL:http://extras.springer.com/2006/978-3- 540-43534-1/004000012A/papers/004000012A/0 04000012A0214.pdf [extrait le 2020-02-17]

## Description

### Domaine technique de l'invention

La présente invention concerne un procédé de fabrication d'alliages de métaux précieux. La présente invention concerne également de tels alliages précieux. En particulier, la présente invention concerne un procédé de fabrication d'alliages légers de métaux précieux obtenus à partir d'or, d'argent, de platine, de palladium, de ruthénium, de rhodium ou d'iridium. Les alliages légers de métaux précieux dont il est question ici sont titrables, c'est-à-dire qu'il s'agit d'alliages dont le rapport entre la masse du métal précieux qui entre dans la composition de l'alliage et la masse totale de cet alliage est déterminé par la loi.

### Arrière-plan technologique de l'invention

Un alliage métallique résulte de la combinaison par fusion d'un premier élément métallique avec au moins un second élément métallique. L'intérêt des alliages métalliques réside dans le fait que les propriétés, notamment mécaniques, de tels alliages sont supérieures aux propriétés mécaniques des éléments métalliques considérés individuellement qui entrent dans leur composition.

Les propriétés mécaniques d'un métal peuvent notamment être améliorées par déformation, en particulier par écrouissage ; ces propriétés mécaniques peuvent aussi être améliorées par voie chimique, en ajoutant au métal de base un ou plusieurs éléments d'alliage. Ces ajouts permettent également souvent d'améliorer les propriétés chimiques telles que la résistance à la corrosion du métal de base.

La technique des alliages métalliques est particulièrement intéressante dans le cas des métaux précieux tels que l'or. En effet, l'or est connu pour se déformer facilement à froid, raison pour laquelle il a été utilisé dès la fin du néolithique pour réaliser des bijoux et des parures ainsi que des pièces de monnaie à partir de l'Antiquité. Néanmoins, la facilité avec laquelle l'or peut être déformé est également un inconvénient puisqu'un simple impact mécanique suffit à déformer le bijou réalisé à l'aide de ce métal noble. C'est pourquoi on a cherché très tôt à améliorer les propriétés mécaniques de l'or en l'alliant avec d'autres éléments métalliques ; l'argent et le cuivre sont les deux principaux métaux utilisés en alliage avec l'or et sont connus pour améliorer la rigidité de l'or.

L'alliage de l'or avec d'autres éléments métalliques tels que l'argent ou le cuivre conduit à des alliages métalliques dont la dureté est supérieure à celle de l'or. Néanmoins, ces alliages d'or ont comme inconvénient de présenter une masse volumique élevée. C'est pourquoi il a été tenté d'allier l'or avec des éléments métalliques de masse volumique plus faible.

Des essais ont déjà été effectués pour tenter d'allier l'or (Au) qui est un métal lourd, c'est-à-dire un métal dont la masse volumique est élevée (environ 19.3 g.cm⁻³), avec le bore (B) qui est un métal très léger, c'est-à-dire dont la masse volumique est faible (environ 2.3 g.cm⁻³). Néanmoins, les tentatives effectuées jusqu'à aujourd'hui pour tenter d'allier l'or et le bore à l'aide des techniques de métallurgie classiques se sont toutes soldées par des échecs ou, au mieux, ont abouti à des taux de dissolution du bore très faibles, ne permettant pas d'envisager une production industrielle. Les matériaux résultant de la combinaison de l'or et du bore se sont en effet révélés instables et il s'est avéré impossible de réaliser des composants massifs titrables tels que de l'or 18 carats à l'aide de cette combinaison. Ces problèmes s'expliquent notamment par le fait qu'au cours de la fusion, on ne parvient pas à mélanger l'or et le bore ; en effet, en raison de sa masse volumique élevée, l'or a tendance à sédimenter au fond du creuset, tandis que le bore dont la masse volumique est plus faible, surnage.

La récente mise sur le marché de poudres de bore obtenues par les techniques de nano-structuration a relancé l'intérêt pour les alliages d'or et de bore et, plus généralement, pour tout type d'alliage entre un métal précieux (or (Au), argent (Ag), platine (Pt), palladium (Pd), ruthénium (Ru), rhodium (Rh) ou iridium (Ir)) et le bore (B).

Les procédés de fabrication d'alliages métalliques par la technologie de la métallurgie des poudres permettent d'obtenir des matériaux qui seraient impossibles à fabriquer à l'aide des techniques de métallurgie traditionnelles. Ceci est particulièrement intéressant dans le cas où le métal qui entre dans la composition d'un tel alliage métallique est un métal précieux titrable tel que l'or (Au), l'argent (Ag), le platine (Pt), le palladium (Pd), le ruthénium (Ru), le rhodium (Rh) ou l'iridium (Ir). En outre, les alliages métalliques obtenus par la technologie des poudres sont à la fois plus légers et plus durs que les alliages métalliques obtenus par les voies de la métallurgie classique.

Un type de bore nano-structuré se présente sous la forme d'une poudre de couleur grise/noire formée de particules dont les dimensions sont comprises entre 5 nm et 12 nm et qui sont formées d'un cœur constitué de HfB₂,de NiB, de CoB, de YB₄ ou de YB₆ et dont la structure est cristalline, et d'une couche de bore amorphe dont l'épaisseur est de quelques nanomètres et dans laquelle le cœur de ces particules est enrobé. Ces particules sont agglomérées entre elles pour former des structures tridimensionnelles dont les dimensions se trouvent dans la gamme micrométrique et dont la surface spécifique est de l'ordre de 700 m² pour 1g de poudre.

Le document US 2017/164700 divulgue un procédé de fabrication additif de type frittage laser sélectif (SLM) à partir d'une poudre d'alliage d'or comprenant:
- 37,5-38,5% massique, ou 41,7-42,5% massique, ou 58,5-59,5% massique ou 75-76% massique d'or 18 carats,
- 10-55% massique de cuivre, ou 10-50% massique de palladium, ou 5-35% massique de nickel,
- 2-15% massique d'argent, ou 10-50% massique d'argent, ou 15-50% massique de cuivre,
- 0,01-3% massique de bore.

Le document intitulé « 18 Carat Yellow Gold Alloys with Increased Hardness » au nom de Rainer Süss et al. et publié dans Gold Bulletin, Springer, London, UK, vol. 37, no. 3-4, 1 septembre 2004, pages 196-207 divulgue une composition d'alliage homogène comprenant:
- de l'or à hauteur de 75% massique,
- du cuivre à hauteur de 11,46-12,50% massique,
- de l'argent à hauteur de 12,35-12,47% massique, et
- du bore à hauteur de 0,04%-0,30% massique.

Le document US 2010/119400 divulgue une méthode d'obtention d'une poudre d'alliage à base de métal noble comprenant du bore consistant à porter à fusion la composition dudit alliage et à faire subir au lingot d'alliage formé une étape de micronisation. La poudre est utilisée dans une étape ultérieure de frittage laser.

Le document US 3 211 550 A divulgue un alliage binaire d'or et de bore où la teneur en bore est comprise entre 1 ppm et 50 % massique, ledit alliage est obtenu par fusion complète d'un mélange de poudres comprenant la poudre d'or et la poudre de bore formant un matériau composite biphasique dans lequel les particules de bore sont dispersées dans une matrice d'or.

### Résumé de l'invention

La présente invention a pour but de procurer un procédé de fabrication d'alliages légers de métaux précieux permettant notamment d'obtenir des alliages légers stables d'un point de vue physicochimique à l'aide desquels il est possible de réaliser des composants massifs. La présente invention a également pour objet un alliage d'or 18 carats et de bore AuB₆ ou Au₂B₁₂, ce dernier composant pouvant contenir des inclusions de AuB₂.

A cet effet, la présente invention concerne un procédé de fabrication d'une pièce par alliage d'un métal précieux avec du bore, le métal précieux étant choisi dans le groupe formé par l'or, l'argent, le platine, le palladium, le ruthénium, le rhodium et l'iridium, ce procédé comprenant les étapes consistant à :
- se munir d'au moins une quantité de métal précieux réduit à l'état de poudre ;
- se munir d'une quantité d'une poudre micrométrique nano-structurée formée d'agrégats de particules, ces agrégats qui constituent la poudre micrométrique nano-structurée présentant des dimensions dans la gamme micrométrique, ces agrégats étant eux-mêmes constitués de particules renfermant pour partie du bore et qui présentent au moins une grandeur géométrique dans la gamme nanométrique responsable de la réactivité de la poudre micrométrique nano-structurée ;
- mélanger la poudre de métal précieux avec la poudre micrométrique nano-structurée et compacter ce mélange de poudres par application d'une pression uni-axiale ;
- soumettre le mélange de poudre de métal précieux et de poudre micrométrique nano-structurée à un traitement de frittage par plasma à étincelles, encore appelé Spark Plasma Sintering ou flash sintering, sous une pression comprise entre 0,5 GPa et 10 GPa, ou bien à un traitement de compression isostatique à chaud, encore appelé Hot Isostatic Pressing ou HIP, sous une pression comprise entre 80 bars et 2200 bars, le traitement étant effectué à une température comprise entre 400°C et 2100°C afin d'obtenir au moins un lingot d'un alliage de métal précieux et de bore, et
- usiner le lingot d'alliage de métal précieux et de bore afin d'obtenir la pièce recherchée, ou bien
- réduire le lingot d'alliage de métal précieux et de bore à l'état de poudre par un traitement de micronisation, et obtenir la pièce recherchée par traitement de la poudre résultant du traitement de micronisation.

Grâce à ces caractéristiques, le procédé selon l'invention permet d'obtenir des alliages de métal précieux et de bore qui présentent à la fois d'excellentes propriétés mécaniques et dont la masse volumique est faible. A la connaissance de la Demanderesse, le procédé selon l'invention offre, pour la première fois, la possibilité d'allier, à une échelle industrielle, un composant de masse volumique très faible, en l'occurrence le bore, avec un métal précieux, notamment mais non exclusivement l'or, dont la masse volumique est élevée. Grâce au procédé de l'invention, il est possible d'obtenir des alliages de métal précieux et de bore stables d'un point de vue physicochimique, présentant d'excellentes propriétés mécaniques, et dont la masse volumique est faible. De façon remarquable, dans le procédé selon l'invention, le métal précieux sélectionné et les particules de bore s'allient intimement, sans qu'à aucun moment un phénomène de ségrégation entre les deux matériaux ne puisse être observé.

Selon des formes spéciales d'exécution de l'invention :
- afin d'obtenir la pièce recherchée, la poudre résultant du traitement de micronisation est introduite dans un moule et soumise à une pression uni-axiale ou isostatique ;
- afin d'obtenir la pièce recherchée, la poudre résultant du traitement de micronisation est soumise à un traitement de fabrication additive tridimensionnelle ;
- le traitement de fabrication additive tridimensionnelle est du type impression directe et est choisi dans le groupe formé par le frittage laser, encore appelé Selective Laser Melting ou SLM, et le frittage par bombardement d'électrons, encore appelé E-beam melting ;
- le traitement de fabrication additive tridimensionnelle est du type impression indirecte et est choisi dans le groupe formé par Inkjetting, nanoparticule jetting ou NPJ et Digital Light Projecting ou DLP.

Selon une autre forme spéciale d'exécution de l'invention, le procédé de fabrication comprend en outre les étapes de :
- mélanger la poudre résultant du traitement de micronisation du lingot d'alliage de métal précieux et de bore avec un liant afin d'obtenir une charge d'alimentation encore appelée feedstock ;
- réaliser une pièce verte encore appelée green body en soumettant la charge d'alimentation à une injection ou micro-injection de fabrication additive ;
- obtenir une pièce brune encore appelée brown body en soumettant la pièce verte à une étape d'élimination du liant polymérique appelée étape de déliantage au cours de laquelle la pièce verte est traitée chimiquement puis thermiquement dans un four pour brûler le liant polymérique résiduel, cette étape de déliantage s'effectuant typiquement en phase gazeuse dans une atmosphère d'acide nitrique ou d'acide oxalique et à une température comprise entre 100°C et 140°C ;
- soumettre la pièce brune à un traitement de frittage sous atmosphère protégée et à une température comprise entre 700°C et 1800°C afin d'obtenir la pièce recherchée.

Selon une autre forme spéciale d'exécution de l'invention, le procédé de fabrication comprend en outre les étapes consistant à :
- mélanger la poudre résultant du traitement de micronisation du lingot d'alliage de métal précieux et de bore avec un liant afin d'obtenir une charge d'alimentation encore appelée feedstock ;
   réaliser une pièce verte encore appelée green body dont la forme correspond au profil de la pièce recherchée en utilisant une technique de fabrication additive indirecte ;
- obtenir une pièce brune encore appelée brown body en soumettant la pièce verte à une étape d'élimination du liant polymérique appelée étape de déliantage au cours de laquelle la pièce verte est traitée chimiquement puis thermiquement dans un four pour brûler le liant polymérique résiduel, cette étape de déliantage s'effectuant typiquement en phase gazeuse dans une atmosphère d'acide nitrique ou d'acide oxalique et à une température comprise entre 100°C et 140°C ;
- soumettre la pièce brune à un traitement de frittage sous atmosphère protégée et à une température comprise entre 700°C et 1800°C afin d'obtenir la pièce recherchée.

Selon d'autres formes spéciales d'exécution de l'invention :
- la technique de fabrication additive est choisie dans le groupe formé par Binder jetting, Solvent on Granulate jetting, FDM ou micro-extrusion ;
- après le traitement de frittage, on soumet la pièce issue de l'étape de frittage à une étape de post-traitement par compression isostatique à chaud, encore appelée Hot Isostatic Pressing ou HIP, sous une pression comprise entre 500 bars et 2200 bars, et à une température comprise entre 600°C et 2100°C ;
- le liant est choisi dans le groupe formé par le polyéthylène glycol PEG, le cellulose acétate butyrate CAB, le nano-cellulose, l'amidon de maïs, le sucre, l'acide polylactique encore appelé Polylactic Acid ou PLA, le polyéthylène, le polypropylène, la cire synthétique ou naturelle et l'acide stéarique ;
- le métal précieux est choisi dans le groupe formé par l'or (Au), l'argent (Ag), le platine (Pt), le palladium (Pd), le ruthénium (Ru), le rhodium (Rh) et l'iridium (Ir), et la poudre de bore micrométrique nano-structurée est choisie dans le groupe formé par le NiB, le CoB, le YB₄ et le YB₆ ;
- on mélange 25% en poids de poudre de bore micrométrique nano-structurée avec 75% en poids d'or ;
- une première forme de poudre de bore micrométrique nano-structurée qui convient bien aux besoins de la présente invention se présente sous la forme d'une poudre de couleur noire/marron, formée de particules dont les dimensions sont comprises entre 25 et 999 nm et qui sont constituées de bore dans des proportions massiques supérieures à 95 %, le solde étant constitué des inévitables impuretés introduites lors de la synthèse, tel que mais non limitativement du carbone, de l'azote, de l'oxygène, du potassium, du sodium, du chlore, de l'iode, du césium, du lithium, du rubidium et du magnésium. Un exemple de poudre de bore micrométrique nano-structurée est donné par le produit commercialisé sous la référence PVZ nano Boron par la société Pavezyum ;
- une deuxième forme de poudre de bore micrométrique nano-structurée qui convient bien aux besoins de la présente invention correspond au matériau désigné par l'appellation « matériau nano-structuré de bore amorphe» dont les conditions d'obtention et les caractéristiques sont décrites dans la demande internationale PCT WO2016207558A1. s'agit d'une poudre de bore micrométrique nano-structurée qui se présente sous la forme de particules dont les dimensions n'excèdent pas 25 nanomètres et qui sont constituées de bore dans des proportions massiques supérieures ou égales à 85%, le solde étant constitué des inévitables impuretés provenant de la synthèse de la poudre qui sont un ou plusieurs des éléments suivants : lithium, sodium, potassium, rubidium, césium, iode, chlore, brome et fluor. Cette poudre de bore micrométrique nano-structurée est obtenue par synthèse dans du sel fondu, technique mieux connue sous sa dénomination anglo-saxonne Synthesis by Molten Salt ou SMS, cette synthèse étant effectuée par voie sèche, par voie humide ou sous atmosphère d'argon ;
- une troisième forme de poudre de bore micrométrique nano-structurée qui convient bien aux besoins de la présente invention se présente sous la forme d'une poudre de couleur grise/noire formée de particules dont les dimensions sont comprises entre 5 nm et 12 nm et qui sont formées d'un cœur constitué de HfB₂,de NiB, de CoB, de YB₄ ou de YB₆ et dont la structure est cristalline, et d'une couche de bore amorphe dont l'épaisseur est de quelques nanomètres et dans laquelle le cœur de ces particules est enrobé. Ces particules sont agglomérées entre elles pour former des aggrégats dont les dimensions se trouvent dans la gamme micrométrique et dont la surface spécifique est de l'ordre de 700 m² pour 1g de poudre. Cette poudre de bore micrométrique nano-structurée est obtenue par synthèse dans du sel fondu, technique mieux connue sous sa dénomination anglo-saxonne Synthesis by Molten Salt ou SMS, cette synthèse étant effectuée par voie sèche, par voie humide ou sous atmosphère d'argon ;
- l'alliage d'or et de bore conformément au procédé de l'invention permet d'obtenir un or 18 carats et de bore AuB₆ ou Au₂B₁₂, ce dernier composant pouvant contenir des inclusions de AuB₂.

La taille des particules est déterminée au moyen de l'une des techniques suivantes : microscopie électronique en transmission, microscopie électronique à balayage, spectroscopie de diffusion dynamique de la lumière ou diffraction des rayons X (à l'aide de la formule de Scherrer pour ce qui est des matériaux cristallins).

La surface spécifique des poudres est déterminée au moyen de la technique d'adsorption de l'azote, selon la méthode de Brunauer, Emmet et Teller encore appelée méthode BET.

Enfin, pour ce qui est de la densité, celle-ci est déterminée au moyen d'un pycnomètre.

### Description détaillée d'un mode de mise en œuvre de l'invention

La présente invention procède de l'idée générale inventive qui consiste à procurer un alliage d'un métal précieux titrable stable d'un point de vue physicochimique et qui présente d'excellentes propriétés mécaniques.

A cet effet, la présente invention a pour objet un procédé de fabrication d'une pièce par alliage d'un métal précieux avec du bore, le métal précieux étant choisi dans le groupe formé par l'or, l'argent, le platine, le palladium, le ruthénium, le rhodium et l'iridium, ce procédé comprenant les étapes consistant à :
- se munir d'au moins une quantité de métal précieux réduit à l'état de poudre ;
- se munir d'une quantité d'une poudre micrométrique nano-structurée formée d'agrégats de particules, ces agrégats qui constituent la poudre micrométrique nano-structurée présentant des dimensions dans la gamme micrométrique, ces agrégats étant eux-mêmes constitués de particules renfermant pour partie du bore et qui présentent au moins une grandeur géométrique dans la gamme nanométrique responsable de la réactivité de la poudre micrométrique nano-structurée ;
- mélanger la poudre de métal précieux avec la poudre micrométrique nano-structurée et compacter ce mélange de poudres par application d'une pression uni-axiale ;
- soumettre le mélange de poudre de métal précieux et de poudre micrométrique nano-structurée à un traitement de frittage par plasma à étincelles (Spark Plasma Sintering ou flash sintering) sous une pression comprise entre 0,5 GPa et 10 GPa, ou bien à un traitement de compression isostatique à chaud (Hot Isostatic Pressing ou HIP) sous une pression comprise entre 80 bars et 2200 bars, le traitement étant effectué à une température comprise entre 400°C et 2100°C afin d'obtenir au moins un lingot d'un alliage de métal précieux et de bore, et
- usiner le lingot d'alliage de métal précieux et de bore afin d'obtenir la pièce recherchée, ou bien
- réduire le lingot d'alliage de métal précieux et de bore à l'état de poudre par un traitement de micronisation, et obtenir la pièce recherchée par traitement de la poudre résultant du traitement de micronisation.

Une fois que l'on a micronisé le lingot d'alliage de métal précieux et de bore obtenu par la mise en œuvre du procédé selon l'invention, une première possibilité pour obtenir la pièce massive recherchée consiste à introduire la poudre résultant du traitement de micronisation dans un moule et à soumettre ce moule à une pression uni-axiale ou isostatique.

Une fois que l'on a micronisé le lingot d'alliage de métal précieux et de bore obtenu par la mise en œuvre du procédé selon l'invention, une deuxième possibilité pour obtenir la pièce massive recherchée consiste à soumettre la poudre résultant du traitement de micronisation à un traitement de fabrication additive tridimensionnelle.

Le traitement de fabrication additive tridimensionnelle peut être du type à impression directe. Les techniques de fabrication additives tridimensionnelles du type direct disponibles sont le frittage laser, encore connu sous sa dénomination anglo-saxonne Selective Laser Melting ou SLM et le frittage par bombardement d'électrons également connu sous sa dénomination anglo-saxonne E-beam melting.

Le traitement de fabrication additive tridimensionnelle peut être du type à impression indirecte. Les techniques de fabrication additives tridimensionnelles du type indirect disponibles sont :
- impression par jet d'encre (Inkjetting) : la poudre résultant du traitement de micronisation du lingot d'alliage de métal précieux et de bore est dispersée dans l'encre. L'encre est imprimée couche après couche, chaque couche étant durcie par exposition au rayonnement d'une source de lumière par exemple UV avant dépôt de la couche suivante.
- nanoparticule jetting (NPJ) : cette technique, notamment développée par la société XJet, est semblable à l'impression par jet d'encre liquide, à la différence près que l'encre est composée de nanoparticules en suspension résultant du traitement de micronisation. La suspension est ensuite projetée, puis séchée couche par couche.
- Digital Light Projecting (DLP) : cette technique consiste à projeter par réflexion sur un miroir l'image de la pièce que l'on souhaite structurer sur un lit de poudre contenant les particules de poudre résultant du traitement de micronisation dispersées dans un photopolymère.

Selon une autre forme spéciale d'exécution de l'invention, après avoir mélangé la poudre résultant du traitement de micronisation du lingot d'alliage de métal précieux et de bore avec un liant afin d'obtenir une charge d'alimentation (feedstock), on réalise une pièce verte (green body) dont la forme correspond au profil de la pièce recherchée en soumettant la charge d'alimentation soit à une injection ou micro-injection, soit à une technique de fabrication additive.

Parmi les techniques de fabrication additive indirectes disponibles, on peut citer :
- Binder jetting : cette technique consiste à projeter un jet d'encre contenant un solvant et un liant sur un lit de poudre dans lequel sont dispersées les particules de poudre résultant du traitement de micronisation dispersées.
- Solvent on Granulate jetting : cette technique consiste à projeter un solvant sur un lit de granulats, chacun de ces granulats étant formé d'une pluralité de particules de poudre résultant du traitement de micronisation agglomérées entre elles au moyen d'un liant. Les dimensions de ces granulats sont de l'ordre de 10 µm à 50 µm. La pièce recherchée est imprimée couche par couche, les granulats s'agglomérant grâce au liant. Une fois la pièce recherchée imprimée, on la soumet à une opération de déliantage afin d'éliminer le solvant, puis elle est frittée.

- FFD (Fused Filament Deposition) : des filaments dont les dimensions sont dans le domaine du millimètre sont réalisés en agglomérant les particules de poudre résultant du traitement de micronisation au moyen d'un liant. Ces filaments sont ensuite chauffés et la matière dont ils sont faits s'échappent d'une buse dont le diamètre est de l'ordre de 40 µm et permettent d'imprimer la pièce recherchée en trois dimensions.
- micro-extrusion.

Quant au liant, il est choisi dans le groupe formé par le polyéthylène glycol (PEG), le cellulose acétate butyrate (CAB), le nano-cellulose (dérivé nanométrique du cellulose), l'amidon de maïs, le sucre, l'acide polylactique (Polylactic Acid ou PLA), le polyéthylène, le polypropylène, la cire synthétique ou naturelle et l'acide stéarique.

Une pièce brune (brown body) est obtenue en soumettant la pièce verte à une étape d'élimination du liant polymérique appelée étape de déliantage au cours de laquelle la pièce verte est traitée chimiquement puis thermiquement dans un four pour brûler le liant polymérique résiduel, cette étape de déliantage s'effectuant typiquement en phase gazeuse dans une atmosphère d'acide nitrique ou d'acide oxalique et à une température comprise entre 100°C et 140°C.

Finalement, la pièce brune est soumise à un traitement de frittage sous atmosphère protégée et à une température comprise entre 700°C et 1800°C afin d'obtenir la pièce recherchée.

On notera qu'il est possible, après le traitement de frittage, de soumettre la pièce issue de l'étape de frittage à une étape de post-traitement par compression isostatique à chaud (Hot Isostatic Pressing ou HIP) sous une pression comprise entre 500 bars et 2200 bars, et à une température comprise entre 600°C et 2100°C.

Conformément à des formes particulières d'exécution de l'invention, le métal précieux est choisi dans le groupe formé par l'or (Au), l'argent (Ag), le platine (Pt), le palladium (Pd), le ruthénium (Ru), le rhodium (Rh) et l'iridium (Ir). Quant au bore, il est choisi dans le groupe formé par :
- le bore qui se présente sous la forme d'une poudre de couleur noire/marron, formée de particules dont les dimensions sont comprises entre 25 et 999 nm et qui sont constituées de bore dans des proportions massiques supérieures à 95 %, le solde étant constitué des inévitables impuretés introduites lors de la synthèse, tel que mais non limitativement du carbone, de l'azote, de l'oxygène, du potassium, du sodium, du chlore, de l'iode, du césium, du lithium, du rubidium et du magnésium. Un exemple d'un tel matériau est donné par le produit commercialisé sous la référence PVZ nano Boron par la société Pavezyum ;
- le bore dont les conditions d'obtention et les caractéristiques sont décrites dans la demande internationale PCT WO2016207558A1. Il s'agit de bore qui se présente sous la forme d'une poudre formée de particules dont les dimensions n'excèdent pas 25 nanomètres et qui sont constituées de bore dans des proportions massiques supérieures ou égales à 85%, le solde étant constitué des inévitables impuretés provenant de la synthèse de la poudre qui sont un ou plusieurs des éléments suivants : lithium, sodium, potassium, rubidium, césium, iode, chlore, brome et fluor.
- la poudre de bore micrométrique nano-structurée de couleur grise/noire formée de particules dont les dimensions sont comprises entre 5 nm et 12 nm et qui sont formées d'un cœur constitué de HfB₂,de NiB, de CoB, de YB₄ ou de YB₆ et dont la structure est cristalline, et d'une couche de bore amorphe dont l'épaisseur est de quelques nanomètres et dans laquelle le cœur de ces particules est enrobé. Ces particules sont agglomérées entre elles pour former des structures agrégats dont les dimensions se trouvent dans la gamme micrométrique et dont la surface spécifique est de l'ordre de 700 m² pour 1g de poudre. Pour obtenir le matériau recherché, un rapport qui donne de bons résultats pour le mélange d'or et de bore est de 25% en poids de poudre de bore micrométrique nano-structurée et de 75% en poids d'or.

En particulier, la présente invention concerne un procédé de fabrication d'alliages légers de métaux précieux obtenus à partir d'or, d'argent, de platine, de palladium, de ruthénium, de rhodium ou d'iridium. Les alliages légers de métaux précieux dont il est question ici sont titrables, c'est-à-dire qu'il s'agit d'alliages dont le rapport entre la masse du métal précieux qui entre dans la composition de l'alliage et la masse totale de cet alliage est déterminé par la loi. Un alliage de métal précieux remarquable obtenu grâce au procédé de l'invention est un alliage d'or et de bore 18 carats avec une masse volumique comprise entre 6.6 et 7 g/cm³. Les produits obtenus sont AuB₆ et Au₂B₁₂, ce dernier composant pouvant contenir des inclusions de AuB₂. Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées.

On notera en particulier qu'il a été décidé de qualifier les poudres de bore dont il est question ici de « micrométriques » et de « nano-structurées » dans la mesure où les agrégats de particules qui constituent ces poudres présentent des dimensions dans le domaine du micromètre, ces agrégats étant eux-mêmes constitués de particules renfermant essentiellement du bore et qui présentent au moins une grandeur géométrique dans la gamme nanométrique responsable de la réactivité de la poudre micrométrique nano-structurée. Par grandeur géométrique responsable de la réactivité, on entend une grandeur géométrique telle que la surface spécifique, la rugosité de surface ou bien encore l'aire d'une face des particules renfermant du bore qui se trouve dans la gamme nanométrique. Ainsi, selon l'invention, pour peu que les particules renfermant du bore présentent au moins une grandeur géométrique dans la gamme nanométrique, d'autres dimensions géométriques de ces particules peuvent se trouver dans la plage micrométrique sans que cela n'affecte la réactivité de ces particules renfermant du bore. On aura également remarqué que, dans toute la présente description, on entend par poudre micrométrique nano-structurée un matériau formé par des agrégats qui s'étendent dans la gamme micrométrique et qui résultent de l'agglomération de particules renfermant essentiellement du bore et dont au moins une dimension se trouve dans la plage nanométrique.

On notera également que l'or utilisé dans le cadre de la présente invention est de l'or ½ jaune vif 24 carats et que les dimensions des particules obtenues par battage de cet or et qui forment la poudre d'or utilisée dans le cadre de la présente invention sont inférieures à 50 µm.

On notera également que les particules de bore micrométriques nano-structurées dont il est question ici sont notamment connues de la thèse au nom de Remi Grosjean, intitulée « Boron-based nanomaterials under extreme conditions », pages 70 et suivantes, présentée publiquement le 17 octobre 2018 à l'Université Pierre et Marie Curie - Paris VI, 2016. Cette thèse est accessible sur le réseau internet à l'adresse suivante : https://tel.archives-ouvertes.fr/tel-01898865 (HAL Id: tel-01898865). Ces particules de bore micrométriques nano-structurées sont obtenues par synthèse dans des sels fondus, également connue sous sa dénomination anglo-saxonne Synthesis in Molten Salts ou SMS. Cette synthèse consiste à mettre en présence des substances réactives de métal et de bore dans un mélange de sels. Lorsque l'on chauffe le mélange, les sels fondent, agissant par conséquent à la façon d'un milieu liquide. La synthèse typique de borures nano-structurés dans des sels fondus met en œuvre une source de métal (habituellement a chlorure MCl_{X}), et de l'hydroborure de sodium. L'hydroborure de sodium est utilisé à la fois comme une source de bore et comme un réducteur, de façon à obtenir M⁰ dans le milieu réactif. L'utilisation de tels précurseurs et de sels de lithium et de potassium nécessite de devoir travailler sous atmosphère inerte, en raison de la sensibilité de ces produits chimiques à l'eau et/ou à l'oxygène. Par conséquent, les précurseurs sont manipulés et mélangés dans une boîte à gants de laboratoire sous atmosphère inerte d'argon. La synthèse proprement dite est menée sous atmosphère d'argon et non d'azote, étant donné que l'argon est susceptible de réagir avec certaines espèces de bore et de conduire à la formation de nitrure de bore.

Les conditions requises pour la mise en œuvre expérimentale sont donc les suivantes :
- veiller à ce que le milieu réactif reste sous atmosphère d'argon ; cet objectif est atteint en utilisant un tube de quartz qui est stable aux températures de travail et qui est relié à une ligne Schlenk.
- chauffer dans une plage de température compris entre 300°C et 1000°C. La zone du tube de quartz dans laquelle la température est homogène a une étendue d'environ 8 cm, c'est-à-dire suffisamment grande pour permettre un chauffage homogène du milieu réactif, et suffisamment limitée pour permettre la condensation des vapeurs de sels pour éviter la perte des solvants durant la réaction. La rampe de chauffage est de 10°C/min.

- éviter des réactions parasites entre le milieu réactif et le tube de quartz. Le carbone vitreux est chimiquement inerte dans une atmosphère d'argon et est par conséquent utilisé comme creuset. Le creuset est suffisamment étendu pour permettre la condensation des vapeurs de sels dans la zone de basse température du four.
- dans certains cas, il est nécessaire d'agiter le mélange réactif. Ceci est fait à l'aide d'une tige de carbone vitreux rotative.

Après la réaction, on laisse le milieu réactif refroidir naturellement. On obtient des borures de métal sous la forme de nanoparticules dispersées dans un volume de sels figés. Pour éliminer les sels, on effectue des cycles de lavage/centrifugation dans un solvant polaire tel que de l'eau ou du méthanol. Parmi les paramètres ajustables, on note la température de synthèse, le temps d'arrêt et le rapport initial entre les sources de métal et de bore.

La thèse mentionnée ci-dessus s'est particulièrement intéressé à deux borures de métal nano-structurés : le diborure de hafnium et l'hexaborure de calcium. CaB6 et HfB2 ne présentent pas de transition de phase sous haute température et pression élevée et sont donc bien adaptés pour étudier la cristallisation de la phase amorphe dans laquelle sont noyées les particules de borure.

Deux mélanges de sels eutectiques, à savoir LiCl/KCl et Lil/KI, ont été utilisés. La première synthèse de HfB2 a été effectuée dans un mélange eutectique LiCl/KCl (45/55 en pourcentage massique) dont la température de fusion est de l'ordre de 350°C. HfCl4 et NaBH4 sont utilisés dans un rapport molaire Hf :B = 1 :4 et sont mélangés avec la solution de sels. Après chauffage à 900°C pendant 4 heures, refroidissement, lavage avec de l'eau désionisée et séchage sous vide, on obtient une poudre noire. Le réseau de diffraction des rayons X de cette poudre montre que HfB2 est la seule phase cristalline et ne présente aucune réflexion correspondant soit aux sels solvants ou au chlorure de sodium qui peuvent apparaître comme sous-produits de la formation de borure. Par ailleurs, la structure de HfB2 est typique de celle des diborures avec des atomes métalliques intercalés entre des feuilles de bore qui présentent une structure en nid d'abeilles.

Selon la formule de Scherrer, la taille des particules est de 7.5 nm. Ceci est confirmé par une étude par microscopie électronique par transmission qui montre que la taille des particules est comprise dans la gamme 5-12 nm. D'autres images obtenues par SAED, FFT et HRTEM confirment que HfB2 est l'unique phase cristalline dans le matériau et que seules les nanoparticules sont cristallines.

La microscopie électronique par transmission montre également que les particules sont entourées d'une écorce amorphe dont l'épaisseur est comprise entre 2 et 4 nm. Les particules se présentent comme des inclusions dans une matrice amorphe tridimensionnelle. Les espaces entre les particules sont remplis par une matrice amorphe dont l'épaisseur est comprise entre 2 et 4 nm. Par conséquent, la matrice est également nano-structurée et le matériau peut être décrit comme un nano-composite.

## Revendications

1. Procédé de fabrication d'une pièce par alliage d'un métal précieux avec du bore, le métal précieux étant choisi dans le groupe formé par l'or, l'argent, le platine, le palladium, le ruthénium, le rhodium et l'iridium, ce procédé comprenant les étapes consistant à :
- se munir d'au moins une quantité de métal précieux réduit à l'état de poudre ;
- se munir d'une quantité d'une poudre micrométrique nano-structurée formée d'agrégats de particules, ces agrégats qui constituent la poudre micrométrique nano-structurée présentant des dimensions dans la gamme micrométrique, ces agrégats étant eux-mêmes constitués de particules renfermant pour partie du bore et qui présentent au moins une grandeur géométrique dans la gamme nanométrique responsable de la réactivité de la poudre micrométrique nano-structurée ;
- mélanger la poudre de métal précieux avec la poudre micrométrique nano-structurée renfermant du bore, et compacter ce mélange de poudres par application d'une pression uni-axiale ;
- soumettre le mélange de poudre de métal précieux et de poudre micrométrique nano-structurée à un traitement de frittage par plasma à étincelles, encore appelé Spark Plasma Sintering ou flash sintering, sous une pression comprise entre 0,5 GPa et 10 GPa, ou bien à un traitement de compression isostatique à chaud, encore appelé Hot Isostatic Pressing ou HIP, sous une pression comprise entre 80 bars et 2200 bars, le traitement étant effectué à une température comprise entre 400°C et 2100°C afin d'obtenir au moins un lingot d'un alliage renfermant du métal précieux et du bore, et
- usiner le lingot d'alliage renfermant du métal précieux et du bore afin d'obtenir la pièce recherchée, ou bien
- réduire le lingot d'alliage renfermant du métal précieux et du bore à l'état de poudre par un traitement de micronisation, et obtenir la pièce recherchée par traitement de la poudre résultant du traitement de micronisation.

2. Procédé de fabrication selon la revendication 1, **caractérisé en ce que**, afin d'obtenir la pièce recherchée, la poudre résultant du traitement de micronisation est introduite dans un moule et soumise à une pression uni-axiale ou isostatique.

3. Procédé de fabrication selon la revendication 1, **caractérisé en ce que**, afin de réaliser la pièce recherchée, on soumet la poudre résultant du traitement de micronisation à un traitement de fabrication additive tridimensionnelle.

4. Procédé de fabrication selon la revendication 3, **caractérisé en ce que** le traitement de fabrication additive tridimensionnelle est du type impression directe et est choisi dans le groupe formé par le frittage laser, encore appelé Selective Laser Melting ou SLM, et le frittage par bombardement d'électrons, encore appelé E-beam melting.

5. Procédé de fabrication selon la revendication 3, **caractérisé en ce que** le traitement de fabrication additive tridimensionnelle est du type impression indirecte et est choisi dans le groupe formé par Inkjetting, nanoparticule jetting ou NPJ) et Digital Light Projecting ou DLP.

6. Procédé de fabrication selon la revendication 1, **caractérisé en ce qu'**il comprend en outre les étapes de :
- mélanger la poudre résultant du traitement de micronisation du lingot d'alliage renfermant du métal précieux et du bore avec un liant afin d'obtenir une charge d'alimentation, encore appelée feedstock ;
- réaliser une pièce verte, encore appelée green body, dont la forme correspond au profil de la pièce recherchée en soumettant la charge d'alimentation soit à une injection ou micro-injection, soit à une technique de fabrication additive ;
- obtenir une pièce brune, encore appelée brown body, en soumettant la pièce verte à une étape d'élimination du liant polymérique appelée étape de déliantage au cours de laquelle la pièce verte est traitée chimiquement puis thermiquement dans un four pour brûler le liant polymérique résiduel, cette étape de déliantage s'effectuant en phase gazeuse dans une atmosphère d'acide nitrique ou d'acide oxalique et à une température comprise entre 100°C et 140°C ;
- soumettre la pièce brune à un traitement de frittage sous atmosphère protégée et à une température comprise entre 700°C et 1800°C afin d'obtenir la pièce recherchée.

7. Procédé de fabrication selon la revendication 6, **caractérisé en ce que** la technique de fabrication additive est choisie dans le groupe formé par Binder jetting, Solvent on Granulate jetting, FDM ou micro-extrusion.

8. Procédé de fabrication selon l'une des revendications 6 et 7, **caractérisé en ce que**, après le traitement de frittage, on soumet la pièce issue de l'étape de frittage à une étape de post-traitement par compression isostatique à chaud, encore appelée Hot Isostatic Pressing ou HIP, sous une pression comprise entre 500 bars et 2200 bars, et à une température comprise entre 600°C et 2100°C.

9. Procédé de fabrication selon l'une des revendications 6 à 8, **caractérisé en ce que** le liant est choisi dans le groupe formé par le polyéthylène glycol PEG, le cellulose acétate butyrate CAB, le nano-cellulose, l'amidon de maïs, le sucre, l'acide polylactique, le polyéthylène, le polypropylène, la cire synthétique ou naturelle et l'acide stéarique.

10. Procédé de fabrication selon la revendication 9, **caractérisé en ce que** l'on mélange 25% en poids de poudre de bore micrométrique nano-structurée avec 75% en poids d'or.

11. Procédé de fabrication selon la revendication 10, **caractérisé en ce que** l'or que l'on utilise est de l'or ½ jaune vif 24 carats et que les dimensions des particules d'or sont inférieures à 50 µm mesurées par microscopie électronique en transmission, microscopie électronique à balayage, spectroscopie de diffusion dynamique de la lumière ou diffraction des rayons X.

12. Procédé de fabrication selon l'une des revendications 10 ou 11, **caractérisé en ce que** la poudre de bore micrométrique nano-structurée est choisie dans le groupe formé par NiB, CoB, YB₄ et YB₆.

13. Procédé de fabrication selon la revendication 12, **caractérisé en ce que** la poudre de bore micrométrique nano-structurée est formée de particules dont les dimensions sont comprises entre 5 nm et 12 nm mesurées par microscopie électronique en transmission, microscopie électronique à balayage, spectroscopie de diffusion dynamique de la lumière ou diffraction des rayons X et qui sont constituées d'un cœur constitué de HfB₂ dont la structure est cristalline, et d'une couche de bore amorphe dont l'épaisseur est de quelques nanomètres et dans laquelle le cœur de ces particules est enrobé, ces particules étant agglomérées entre elles pour former des structures tridimensionnelles dont les dimensions se trouvent dans la gamme micrométrique.

14. Procédé de fabrication selon la revendication 13, **caractérisé en ce que** la surface spécifique de la poudre de bore micrométrique nano-structurée est de l'ordre de 700 m² pour 1g de poudre déterminée au moyen de la technique d'adsorption de l'azote, selon la méthode de Brunauer, Emmet et Teller, encore appelée méthode BET.

15. Procédé de fabrication selon l'une des revendications 1 à 11, **caractérisé en ce que** la poudre micrométrique nano-structurée est formée de particules dont les dimensions géométriques sont comprises entre 25 et 999 nm mesurées par microscopie électronique en transmission, microscopie électronique à balayage, spectroscopie de diffusion dynamique de la lumière ou diffraction des rayons X et qui sont constituées de bore dans des proportions massiques supérieures à 95%, le solde étant constitué d'inévitables impuretés provenant de la synthèse de la poudre et qui sont un ou plusieurs des éléments suivants : carbone, azote, oxygène, potassium, sodium, chlore, iode, césium, lithium, rubidium et magnésium, ces particules présentant au moins une grandeur géométrique dans la gamme nanométrique responsable de la réactivité de la poudre micrométrique nano-structurée.

16. Procédé de fabrication selon la revendication 15, **caractérisé en ce que** la surface spécifique de la poudre de bore micrométrique nano-structurée est d'au moins 100 m² pour 1g de poudre déterminée au moyen de la technique d'adsorption de l'azote, selon la méthode de Brunauer, Emmet et Teller, encore appelée méthode BET.

17. Procédé de fabrication selon l'une des revendications 1 à 11, **caractérisé en ce que** la poudre micrométrique nano-structurée se présente sous la forme de particules dont les dimensions n'excèdent pas 25 nm mesurées par microscopie électronique en transmission, microscopie électronique à balayage, spectroscopie de diffusion dynamique de la lumière ou diffraction des rayons X et qui sont constituées de bore dans des proportions massiques supérieures ou égales à 85%, le solde étant constitué d'inévitables impuretés provenant de la synthèse de la poudre et qui sont un ou plusieurs des éléments suivants : lithium, sodium, potassium, rubidium, césium, iode, chlore, brome et fluor.

18. Alliage d'or 18 carats et de bore AuB₆ ou Au₂B₁₂, ce dernier composant pouvant contenir des inclusions de AuB₂.

19. Alliage selon la revendication 18, **caractérisé en ce qu'**il présente une masse volumique déterminée au moyen d'un pycnomètre comprise entre 6.6 et 7 g/cm³.

## Patentansprüche

1. Verfahren zur Herstellung eines Werkstücks durch Legieren eines Edelmetalls mit Bor, wobei das Edelmetall aus der Gruppe ausgewählt wird, die durch Gold, Silber, Platin, Palladium, Ruthenium, Rhodium und Iridium gebildet wird, wobei dieses Verfahren die folgenden Schritte umfasst:
- sich mit mindestens einer Menge an Edelmetall versehen, das zu einem Pulver zerkleinert worden ist;
- sich mit einer Menge eines nanostrukturierten mikrometrischen Pulvers versehen, das aus Teilchenaggregaten gebildet wird, wobei diese Aggregate, die das nanostrukturierte mikrometrische Pulver darstellen, Abmessungen im Mikrometerbereich aufweisen, wobei diese Aggregate selbst aus Teilchen gebildet werden, die zum Teil Bor einschließen, und die mindestens eine geometrische Größe im Nanometerbereich aufweisen, die verantwortlich für die Reaktionsfähigkeit des nanostrukturierten mikrometrischen Pulvers ist;
- Vermischen des Edelmetallpulvers mit dem nanostrukturierten mikrometrischen Pulver, das Bor einschließt, und Verdichten dieses Pulvergemisches durch Anlegen eines einachsigen Drucks;
- Unterwerfen des Gemisches aus Edelmetallpulver und aus dem nanostrukturierten mikrometrischen Pulver einer Sinterbehandlung durch Funkenplasma, auch Spark Plasma Sintern oder Flash-Sintern genannt, mit einem Druck, der zwischen 0,5 GPa und 10 GPa liegt, oder einer isostatischen Heißpressbehandlung, auch Hot Isostatic Pressing oder HIP genannt, mit einem Druck, der zwischen 80 bar und 2200 bar liegt, wobei die Behandlung bei einer Temperatur durchgeführt wird, die zwischen 400 °C und 2100 °C liegt, um mindestens einen Barren einer Legierung zu erhalten, die Edelmetall und Bor einschließt, und
- Bearbeiten des Barrens einer Legierung, die Edelmetall und Bor einschließt, um das gesuchte Werkstück zu erhalten, oder
- Reduzieren des Barrens einer Legierung, die Edelmetall und Bor einschließt, in den Pulverzustand durch eine Mikronisierungsbehandlung, und Erhalten des gesuchten Werkstücks durch Behandeln des Pulvers, das aus der Mikronisierungsbehandlung hervorgeht.

2. Verfahren zur Herstellung nach Anspruch 1, **dadurch gekennzeichnet, dass** zum Erhalten des gesuchten Werkstücks das Pulver, das aus der Mikronisierungsbehandlung hervorgeht, in eine Form eingebracht wird, und einem einachsigen oder isostatischen Druck ausgesetzt wird.

3. Verfahren zur Herstellung nach Anspruch 1, **dadurch gekennzeichnet, dass** zum Fertigen des gesuchten Werkstücks das Pulver, das aus der Mikronisierungsbehandlung hervorgeht, einer Behandlung durch eine dreidimensionale additive Fertigung ausgesetzt wird.

4. Verfahren zur Herstellung nach Anspruch 3, **dadurch gekennzeichnet, dass** die Behandlung durch eine dreidimensionale additive Fertigung in der Art eines Direktdrucks ist, und aus der Gruppe ausgewählt wird, die durch Lasersintern, auch Selective Laser Melting oder SLM genannt, und Elektronenbeschusssintern, auch E-beam Melting genannt, gebildet wird.

5. Verfahren zur Herstellung nach Anspruch 3, **dadurch gekennzeichnet, dass** die Behandlung durch eine dreidimensionale additive Fertigung in der Art eines indirekten Drucks ist, und aus der Gruppe ausgewählt wird, die durch Inkjetting, Nanopartikeljetting oder NPJ und Digital Light Projecting oder DLP gebildet wird.

6. Verfahren zur Herstellung nach Anspruch 1, **dadurch gekennzeichnet, dass** es weiter die folgenden Schritte umfasst:
- Vermischen des Pulvers, das aus der Mikronisierungsbehandlung des Legierungsbarrens, der Edelmetall und Bor einschließt, hervorgeht mit einem Bindemittel, um ein Ausgangsmaterial, auch Feedstock genannt, zu erhalten;
- Fertigen eines Grünlings, auch Green Body genannt, dessen Form dem Profil des gesuchten Werkstücks entspricht, indem das Ausgangsmaterial entweder einer Einspritzung oder Mikroeinspritzung, oder einer Technik einer additiven Fertigung unterzogen wird;
- Erhalten eines Bräunlings, auch Brown Body genannt, indem der Grünling einem Schritt des Entziehens des Polymerbindemittels, Entbinderungsschritt genannt, unterzogen wird, bei dem der Grünling chemisch, und danach thermisch in einem Ofen behandelt wird, um das verbliebene Polymerbindemittel zu verbrennen, wobei dieser Entbinderungsschritt in der gasförmigen Phase in einer Salpetersäure- oder Oxalsäure-Atmosphäre, und mit einer Temperatur durchgeführt wird, die zwischen 100 °C und 140 °C liegt;
- Unterziehen des Bräunlings einer Sinterbehandlung unter einer geschützten Atmosphäre und mit einer Temperatur, die zwischen 700 °C und 1800 °C liegt, um das gesuchte Werkstück zu erhalten.

7. Verfahren zur Herstellung nach Anspruch 6, **dadurch gekennzeichnet, dass** die additive Fertigungstechnik aus der Gruppe ausgewählt wird, die durch Binder Jetting, Solvent oder Granulate Jetting, FDM oder Mikro-Extrudieren gebildet wird.

8. Verfahren zur Herstellung nach einem der Ansprüche 6 und 7, **dadurch gekennzeichnet, dass** das aus dem Sinterschritt stammende Werkstück nach der Sinterbehandlung einem Nachbehandlungsschritt durch heiß-isostatisches Pressen, auch Hot Isostatic Pressing oder HIP genannt, mit einem Druck, der zwischen 500 bar und 2200 bar liegt, und mit einer Temperatur, die zwischen 600 °C und 2100 °C liegt, unterzogen wird.

9. Verfahren zur Herstellung nach einem der Ansprüche 6 bis 8, **dadurch gekennzeichnet, dass** das Bindemittel aus der Gruppe ausgewählt wird, die durch Polyethylenglykol PEG, Celluloseacetatbutyrat CAB, Nanocellulose, Maisstärke, Zucker, Polymilchsäure, Polyethylen, Polypropylen, synthetischem oder natürlichem Wachs und Stearinsäure gebildet wird.

10. Verfahren zur Herstellung nach Anspruch 9, **dadurch gekennzeichnet, dass** 25 Gew.-% an nanostrukturiertem mikrometrischem Borpulver mit 75 Gew.-% an Gold vermischt werden.

11. Verfahren zur Herstellung nach Anspruch 10, **dadurch gekennzeichnet, dass** das Gold, das verwendet wird, Halbgelbgold mit 24 Karat ist, und die Abmessungen der Goldteilchen kleiner als 50 µm, mit dem Transmissionselektronenm ikroskopie, Rasterelektronenm ikroskopie, dynamische Streulicht- oder Röntgenbeugungs-Spektroskopie gemessen, sind.

12. Verfahren zur Herstellung nach einem der Ansprüche 10 oder 11, **dadurch gekennzeichnet, dass** das nanostrukturierte mikrometrische Borpulver aus der Gruppe ausgewählt wird, die durch NiB, CoB, YB₄ und YB₆ gebildet wird.

13. Verfahren zur Herstellung nach Anspruch 12, **dadurch gekennzeichnet, dass** das nanostrukturierte mikrometrische Borpulver aus Teilchen gebildet wird, deren Abmessungen zwischen 5 nm und 12 nm liegen, die durch Transmissionselektronenmikroskopie, Rasterelektronenmikroskopie, dynamische Streulicht- oder Röntgenbeugungs-Spektroskopie gemessen werden, und die aus einem Kern gebildet werden, der aus HfB₂ gebildet ist, dessen Struktur kristallin ist, und aus einer amorphen Borschicht, deren Dicke einige Nanometer beträgt, und wobei der Kern dieser Teilchen überzogen ist, wobei diese Teilchen miteinander agglomeriert sind, um dreidimensionale Strukturen zu bilden, deren Abmessungen sich im mikrometrischen Bereich befinden.

14. Verfahren zur Herstellung nach Anspruch 13, **dadurch gekennzeichnet, dass** die spezifische Oberfläche des nanostrukturierten mikrometrischen Borpulvers in der Größenordnung von 700 m² für 1 g an Pulver ist, die anhand der Stickstoffadsorptionstechnik entsprechend der Brunauer, Emmet und Teller-Methode, auch BET-Methode genannt, bestimmt wird.

15. Verfahren zur Herstellung nach einem der Ansprüche 1 bis 11, **dadurch gekennzeichnet, dass** das nanostrukturierte mikrometrische Pulver aus Teilchen gebildet wird, deren geometrische Abmessungen zwischen 25 und 999 nm liegen, die durch Transmissionselektronenmikroskopie, Rasterelektronenmikroskopie, dynamische Streulicht- oder Röntgenbeugungs-Spektroskopie gemessen werden, und die aus Bor in Massenproportionen von mehr als 95 % gebildet werden, wobei der Rest aus unvermeidbaren Verunreinigungen gebildet wird, die aus der Synthese des Pulvers stammen, und die eines oder mehrere der folgenden Elemente sind: Kohlenstoff, Stickstoff, Sauerstoff, Kalium, Sodium, Chlor, Jod, Cäsium, Lithium, Rubidium und Magnesium, wobei diese Teilchen mindestens eine geometrische Größe im nanometrischen Bereich aufweisen, die verantwortlich für das Reaktionsfähigkeit des nanostrukturierten mikrometrischen Pulvers ist.

16. Verfahren zur Herstellung nach Anspruch 15, **dadurch gekennzeichnet, dass** die spezifische Oberfläche des nanostrukturierten mikrometrischen Borpulvers mindestens 100 m² für 1 g an Pulver ist, die anhand der Stickstoffadsorptionstechnik entsprechend der Brunauer, Emmet und Teller-Methode, auch BET-Methode genannt, bestimmt wird.

17. Verfahren zur Herstellung nach einem der Ansprüche 1 bis 11, **dadurch gekennzeichnet, dass** sich das nanostrukturierte mikrometrische Pulver in Form von Teilchen darstellt, deren Abmessungen 25 nm nicht übersteigen, die durch Transmissionselektronenmikroskopie, Rasterelektronenmikroskopie, dynamische Streulicht- oder Röntgenbeugungs-Spektroskopie gemessen werden, und die aus Bor in Massenproportionen von mehr als oder gleich 85 % gebildet werden, wobei der Rest aus unvermeidbaren Verunreinigungen gebildet wird, die aus der Synthese des Pulvers stammen, und die eines oder mehrere der folgenden Elemente sind: Lithium, Sodium, Kalium, Rubidium, Cäsium, Jod, Chlor, Brom und Fluor.

18. Legierung aus 18-Karat-Gold und Bor AuB₆ oder Au₂B₁₂, wobei diese letztere Komponente Einschlüsse von AuB₂ enthalten kann.

19. Legierung nach Anspruch 18, **dadurch gekennzeichnet, dass** sie eine Volumenmasse, die anhand eines Pyknometers bestimmt wird, aufweist, die zwischen 6,6 und 7 g/cm³ liegt.

## Claims

1. Method for manufacturing a part by alloying a precious metal with boron, the precious metal being selected from the group formed by gold, silver, platinum, palladium, ruthenium, rhodium and iridium, this method comprising the steps of:
- providing at least one quantity of precious metal reduced to powder form;
- providing a quantity of a nano-structured micrometric powder formed by aggregates of particles, these aggregates which constitute the nano-structured micrometric powder having dimensions within the micrometric range, these aggregates being themselves constituted of particles containing, at least in part, boron, and which have at least one geometrical value within the nanometric range responsible for the reactivity of the nano-structured micrometric powder;
- mixing the precious metal powder with the boron-containing nano-structured micrometric powder and compacting this mixture of powders by applying a uniaxial pressure;
- subjecting the mixture of precious metal powder and nano-structured micrometric powder to a spark plasma sintering or flash sintering treatment at a pressure that lies in the range 0.5 GPa to 10 GPa, or to a hot isostatic pressing (HIP) treatment at a pressure that lies in the range 80 bar to 2,200 bar, the treatment being carried out at a temperature that lies in the range 400°C to 2,100°C in order to obtain at least one ingot of an alloy containing precious metal and boron, and
- machining the precious metal- and boron-containing alloy ingot to obtain the desired part, or
- reducing the precious metal- and boron-containing alloy ingot to powder form by a micronisation treatment, and obtaining the desired part by treating the powder resulting from the micronisation treatment.

2. Manufacturing method according to claim 1, **characterised in that**, in order to obtain the desired part, the powder resulting from the micronisation treatment is inserted into a mould and subjected to a uniaxial or isostatic pressure.

3. Manufacturing method according to claim 1, **characterised in that**, in order to produce the desired part, the powder resulting from the micronisation treatment is subjected to a three-dimensional additive manufacturing treatment.

4. Manufacturing method according to claim 3, **characterised in that** the three-dimensional additive manufacturing treatment is of the direct printing type and is selected from the group formed by selective laser melting (SLM), and by electron bombardment E-beam melting.

5. Manufacturing method according to claim 3, **characterised in that** the three-dimensional additive manufacturing treatment is of the indirect printing type and is selected from the group formed by Inkjetting, nanoparticle jetting (NPJ) and Digital Light Projecting (DLP).

6. Manufacturing method according to claim 1, **characterised in that** it further comprises the steps of:
- mixing the powder resulting from the micronisation treatment of the precious metal- and boron-containing alloy ingot with a binder to obtain a feedstock;
- producing a green body, the shape whereof corresponds to the desired work profile by subjecting the feedstock either to an injection or micro-injection, or to an additive manufacturing technique;
- obtaining a brown body by subjecting the green body to a step of eliminating the polymer binder, referred to as a debinding step, during which the green body is chemically treated then heat treated in a furnace to burn the residual polymer binder, this debinding step being carried out in gaseous phase in a nitric acid or oxalic acid atmosphere and at a temperature in the range 100°C to 140°C;
- subjecting the brown body to a sintering treatment in a protected atmosphere and at a temperature in the range 700°C to 1,800°C to obtain the desired part.

7. Manufacturing method according to claim 6, **characterised in that** the additive manufacturing technique is selected from the group formed by Binder jetting, Solvent on Granulate jetting, FDM or micro-extrusion.

8. Manufacturing method according to one of claims 8 and 9, **characterised in that** after the sintering treatment, the part resulting from the sintering step is subjected to a hot isostatic pressing (HIP) post-treatment step at a pressure that lies in the range 500 bar to 2,200 bar, and at a temperature that lies in the range 600°C to 2,100°C.

9. Manufacturing method according to one of claims 6 to 8, **characterised in that** the binder is selected from the group formed by polyethylene glycol (PEG), cellulose acetate butyrate (CAB), nano-cellulose, corn starch, sugar, polylactic acid, polyethylene, polypropylene, synthetic or natural wax and stearic acid.

10. Manufacturing method according to claim 9, **characterised in that** 25 wt% nano-structured micrometric boron powder is mixed with 75 wt% gold.

11. Manufacturing method according to claim 10, **characterised in that** the gold used is 24-karat ½ bright yellow gold and that the dimensions of the gold particles are less than 50 µm transmission electron microscopy, scanning electron microscopy, dynamic light scattering or X-ray diffraction.

12. Manufacturing method according to one of claims 10 or 11, **characterised in that** the nano-structured micrometric boron powder is selected from the group formed by NiB, CoB, YB₄ and YB₆.

13. Manufacturing method according to claim 12, **characterised in that** the nano-structured micrometric boron powder is formed of particles whose dimensions lie in the range 5 nm to 12 nm and which are formed of a core constituted of HfB₂, whose structure is crystalline, and of a layer of amorphous boron, the thickness whereof is equal to several nanometres and which coats the core of these particles, these particles being agglomerated with one another to form three-dimensional structures, the dimensions whereof lie in the micrometric range.

14. Manufacturing method according to claim 13, **characterised in that** the specific surface area of the nano-structured micrometric boron powder is in the order of 700 m² for 1 g of powder determined by means of the nitrogen adsorption technique, according to the Brunauer-Emmet-Teller (BET) method.

15. Manufacturing method according to one of claims 1 to 11, **characterised in that** the nano-structured micrometric powder is formed of particles whose geometrical dimensions lie in the range 25 to 999 nm measured by transmission electron microscopy, scanning electron microscopy, dynamic light scattering or X-ray diffraction and which are made of boron in proportions by weight of greater than 95%, the remainder being constituted by unavoidable impurities originating from the synthesis of the powder and which are one or more of the following elements: carbon, nitrogen, oxygen, potassium, sodium, chlorine, iodine, caesium, lithium, rubidium and magnesium. these particles having at least one geometric value in the nanometric range responsible for the reactivity of the nano-structured micrometric powder.

16. Manufacturing method according to claim 15, **characterised in that** the specific surface area of the nano-structured micrometric boron powder is at least 100 m² for 1 g of powder determined using the nitrogen adsorption technique, according to the Brunauer-Emmet-Teller (BET) method.

17. Manufacturing method according to one of claims 1 to 11, **characterised in that** the nano-structured micrometric powder takes the form of particles whose dimensions do not exceed 25 nm measured by transmission electron microscopy, scanning electron microscopy, dynamic light scattering or X-ray diffraction and which are made of boron in proportions by weight of greater than or equal to 85%, the remainder being constituted by unavoidable impurities originating from the synthesis of the powder and which are one or more of the following elements: lithium, sodium, potassium, rubidium, caesium, iodine, chlorine, bromine and fluorine.

18. AuB₆ or Au₂B₁₂ gold/boron alloy, the latter component being capable of containing AuB₂ inclusions.

19. Alloy according to claim 18, **characterised in that** it has a density determined using a pycnometer that lies in the range 6.6 to 7 g/cm³.
